# EUROPÄISCHE PATENTSCHRIFT

(11) **EP 2 228 324 B1**
(45) Veröffentlichungstag und Bekanntmachung des Hinweises auf die Patenterteilung: **08.01.2014**
(21) Anmeldenummer: 10002215.1
(22) Anmeldetag: 04.03.2010
(51) Int. Cl.: B65G 11/20, B65G 69/16, G07F 7/06

(54) **Vorrichtung zum Transportieren von Leergut**
Device for transporting empty goods
Dispositif de transport de bouteilles vides

(30) Priorität: 14.03.2009 DE 102009013245
(43) Veröffentlichungstag der Anmeldung: 15.09.2010
(73) Patentinhaber: Wincor Nixdorf International GmbH, 33106 Paderborn (DE)
(72) Erfinder: Springsguth, Stephan, 98704 Langenwiesen (DE)
(74) Vertreter: Richly, Erik

(56) Entgegenhaltungen:
- EP-A2- 1 106 534
- WO-A1-92/14666
- WO-A1-98/02853
- DE-B- 1 068 182
- US-A- 2 296 444
- US-A- 2 312 438

## Beschreibung

### Stand der Technik

Die Erfindung geht aus von einer Vorrichtung zum Transportieren von Leergut in einem Leergut-Rücknahmeautomaten von einem erhöhten Niveau in einen Sammelbehälter auf einem niederen Niveau.

Derartige Vorrichtungen dienen dazu, Leergut nach der Rücknahme einem Sammelbehälter zuzuführen. Zu dem Leergut zählen insbesondere Flaschen aus Glas oder Kunststoff und Dosen. Dabei kann es sich um Einweg- oder Mehrwegbehälter handeln. Die Rücknahme kann automatisch durch einen Leergut-Rücknahmeautomaten oder manuell erfolgen. Bei der Rücknahme durch einen Leergut-Rücknahmeautomaten werden charakteristische Merkmale der Leergutbehälter mittels Sensoren erfasst. Bei der manuellen Rücknahme werden die charakteristischen Merkmale durch eine Person optisch und haptisch erfasst. Zu den charakteristischen Merkmalen zählen beispielsweise das Material, die äußere Form, die Farbe, ein Strichcode oder die Wiederverwertbarkeit des Leerguts. Die Zuordnung des Leerguts zu verschiedenen Sammelbehältern, verschiedenen Sammeltischen oder verschiedenen Transportwegen erfolgt in Abhängigkeit dieser charakteristischen Merkmale.

Beim Sammeln des Leergutes in Sammelbehältern muss darauf geachtet werden, dass insbesondere das Leergut aus Glas nicht zerbricht. Hierzu sind Vorrichtungen mit Transportbändern bekannt. Als nachteilig erweist sich jedoch, dass die Transportbänder einen Motor als Antrieb benötigen, was mit einem technischen Aufwand bei der Installation und der Instandhaltung verbunden ist.

Aus der US 2,296,444 A1 ist eine Vorrichtung nach dem Oberbegriff des Anspruchs 1 bekannt. In dieser Vorrichtung trifft das Leergut auf ein erstes Element (21) und springt es zurück gegen ein anderes Element (22).

Der Erfindung liegt die Aufgabe zugrunde, eine Vorrichtung zum Transportieren von Leergut in einen Sammelbehälter zur Verfügung zu stellen, bei der das Zerbrechen von Leergut ausgeschlossen ist, die keinen Motor oder sonstigen Antrieb und keine Sensoren benötigt, und die ein gleichmäßiges Verteilen des Leergutes im Sammelbehälter ohne die Bildung von Schüttkegeln ermöglicht.

### Die Erfindung und ihre Vorteile

Die Aufgabe wird durch eine Vorrichtung mit den Merkmalen des Anspruchs 1 gelöst. Die Vorrichtung zeichnet sich dadurch aus, dass sie mit einer ersten schiefen Ebene, einem Stoßabsorber und einer zweiten schiefen Ebene ausgestattet ist. Dabei sorgt die erste schiefe Ebene dafür, dass das Leergut in einer liegenden Ausrichtung von dem erhöhten Niveau auf ein Zwischenniveau geführt wird. Das Niveau des Zwischenniveaus ist niederer ist als das erhöhte Niveau und höher als das niedere Niveau des Sammelbehälters. Nach dem Verlassen oder beim Verlassen der ersten schiefen Ebene trifft das Leergut auf den Stoßabsorber. Dabei wird das Leergut abgebremst, so dass es die Geschwindigkeit Null oder allenfalls eine wesentlich geringere Geschwindigkeit als am unteren Ende der ersten schiefen Ebene aufweist. In bevorzugter Weise handelt es sich bei der Wechselwirkung zwischen dem Stoßabsorber und dem Leergut um einen inelastischen Stoß, bei dem die kinetische Energie des Leergutes in innere Energie des Stoßabsorbers umgewandelt wird. Hierzu besteht der Stoßabsorber beispielsweise aus einem elastisch oder plastisch verformbaren Material. Alternativ ist der Stoßabsorber zweischalig kasten- oder zylinderförmig ausgeprägt, wobei die der ersten schiefen Ebene zugewandte Halbschale mit wenigstens einem Dämpferelement an der der ersten schiefen Ebene abgewandten Halbschale angekoppelt ist. Als Dämpferelemente sind Federelemente, hydraulische Stoßdämpfer oder schockabsorbierende Kunststoffe, wie etwa Styrophor oder Schaumstoffe einsetzbar. Auch mehrschalige Ausführungen des Stoßabsorbers sind einsetzbar, wobei wenigstens zwei Schalen durch mindestens ein Dämpferelement miteinander gekoppelt sind. Nach der Wechselwirkung kehrt der Stoßabsorber wieder in seine Ausgangsform zurück, so dass er beim Auftreffen des nachfolgenden Leergutes erneut kinetische Energie aufnehmen und in innere Energie umwandeln kann.

Nach dem Abbremsen gleitet das Leergut über die zweite schiefe Ebene in den Sammelbehälter. Die zweite schiefe Ebene ist so angeordnet, dass das Leergut nicht in einem stabilen Gleichgewicht zu liegen kommt, sondern direkt nach dem Abbremsen durch den Stoßabsorber auf die zweite schiefe Ebene gelangt und weiter abwärts gleitet. Dabei ist die Höhe der zweiten schiefen Ebene wesentlich kleiner als die Höhe der ersten schiefen Ebene. Die erste schiefe Ebene dient dazu, die Distanz zwischen dem erhöhten Niveau und dem Sammelbehälter nahezu vollständig zu überwinden. Kurz vor Erreichen des Sammelbehälters endet die erste schiefe Ebene und das Leergut wird durch den Stoßabsorber abgebremst. Die zweite schiefe Ebene sorgt anschließend lediglich dafür, dass das Leergut von dem Stoßabsorber in den Sammelbehälter gelangt. Aufgrund der geringen Höhe der zweiten schiefen Ebene wird das Leergut nur geringfügig beschleunigt, so dass es mit kleiner Geschwindigkeit in dem Sammelbehälter ankommt. Eine Beschädigung des Leergutes beim Erreichen des Sammelbehälters und bei einer Wechselwirkung mit Leergut in dem Sammelbehälter wird dadurch vermieden.

Die Vorrichtung sorgt für den Transport des Leergutes ohne Antrieb und ohne Sensoren. Auf den schiefen Ebenen gleitet das Leergut bis zum Sammelbehälter aufgrund seiner Gewichtskraft. Auch das Abbremsen des Leergutes erfolgt ohne Elemente, die einen Antrieb oder Sensoren umfassen. In dem Sammelbehälter wird das Leergut nacheinander entsprechend seiner Reihenfolge bei der Ankunft abgelegt. Dabei bilden sich keine Schüttkegel aus.

Nach einer vorteilhaften Ausgestaltung der Erfindung ist die Vorrichtung mit einer dritten schiefen Ebene ausgestattet, welche das Zwischenniveau mit einem weiteren Sammelbehälter auf dem niederen Niveau verbindet. Dabei bilden die zweite und die dritte schiefe Ebene entlang ihrer nach oben weisenden Seite eine gemeinsame Kante oder einen gemeinsamen Grat aus. Die nach oben weisende Seite der zweiten und dritten schiefen Ebene verläuft entweder in dem Zwischenniveau oder knapp unterhalb des Zwischenniveaus.

Die zweite und dritte schiefe Ebene bilden zusammen eine Struktur aus, die einem Satteldach entspricht. Die zweite und dritte schiefe Ebene sind in entgegen gesetzte Richtungen geneigt. Die Kante oder der Grat, entlang dem sich die zweite und dritte schiefe Ebene treffen, verläuft entlang der oder parallel zu der durch die erste schiefe Ebene vorgegebenen Transportrichtung. Da das Leergut auf diesem Grat nicht liegen bleiben kann, gleitet es ohne Einwirkung äußerer Kräfte entweder die zweite oder dritte schiefe Ebene hinunter. Das ankommende Leergut wird damit statistisch in den einen oder anderen Sammelbehälter verteilt. Die Anordnung der zweiten und dritten schiefen Ebene hat damit die Funktion eines Verteilers.

Nach einer weiteren vorteilhaften Ausgestaltung der Erfindung ist die Neigung der zweiten schiefen Ebene und der dritten schiefen Ebene qualitativ identisch. Die beiden Ebenen sind damit symmetrisch ausgerichtet. Sie sind darüber hinaus bevorzugt gleich lang.

Nach einer weiteren vorteilhaften Ausgestaltung der Erfindung weist die erste schiefe Ebene an ihren Seiten Seitenteile auf, die als Stützelemente dienen. Sie verhindern, dass das Leergut seitlich von der ersten schiefen Ebene nach unten fallen kann. Die erste schiefe Ebene bildet zusammen mit den Seitenteilen eine Rinne um längliche Leergutbehälter in deren Längsrichtung zu führen und zu transportieren. Ferner unterstützen sie zusammen mit einer in ihrer Breite an die Leergutbehälter angepaßten ersten schiefen Ebene den Transport in Längsrichtung der länglichen Leergutbehälter.

Nach einer weiteren vorteilhaften Ausgestaltung der Erfindung ist der Stoßabsorber in Verlängerung der Ausrichtung der Rinne angeordnet. Die zweite schiefe Ebene ist zwischen der Rinne und dem Stoßabsorber angeordnet. Ihre nach oben weisende Kante kann in dem Zwischenniveau oder unterhalb des Zwischenniveaus verlaufen. Darüber hinaus verläuft die zweite schiefe Ebene unterhalb des Zwischenniveaus. Sofern die Vorrichtung zusätzlich mit einer dritten schiefen Ebene ausgestattet ist, befindet diese sich ebenfalls zwischen der ersten der Rinne und dem Stoßabsorber.

Nach einer weiteren vorteilhaften Ausgestaltung der Erfindung ist die Vorrichtung mit einem Übergangsbereich zwischen der ersten schiefen Ebene und dem Stoßabsorber ausgestattet. In dem Übergangsbereich ist die Neigung gegenüber der Horizontalen kleiner als die Neigung der ersten schiefen Ebene. Der Übergangsbereich aus einem ebenen Abschnitt oder aus mehreren ebenen Abschnitten bestehen. Damit geht die Ausrichtung des Leergutes im Übergangsbereichs schrittweise in eine horizontale Ausrichtung über. Ein derartiger Übergangsbereich kann auch am oberen Ende der ersten schiefen Ebene angeordnet sein, um die Neigung des Leergutes beim Übergang von dem erhöhten Niveau auf die erste schiefe Ebene schrittweise zu ändern.

Nach einer weiteren vorteilhaften Ausgestaltung der Erfindung ist die Vorrichtung mit einem Übergangsbereich zwischen der ersten schiefen Ebene und dem Stoßabsorber ausgestattet, wobei der Übergangsbereich einen gekrümmten Verlauf aufweist. An dem der ersten schiefen Ebene zugewandten Ende des Übergangsbereichs stimmt die Steigung mit der Neigung der ersten schiefen Ebene überein. An dem dem Stoßabsorber zugewandten Ende weist der Übergangsbereich einen horizontalen Verlauf auf. Zwischen den beiden Enden nimmt die Steigung des Übergangsbereichs stetig ab. Damit ist die erste schiefe Ebene mit einem Auslauf ausgestattet. Ein derartiger gekrümmter Übergangsbereich kann auch am oberen Ende der ersten schiefen Ebene angeordnet sein.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel einer erfindungsgemäßen Vorrichtung dargestellt. Es zeigt:
- Figur 1: Vorrichtung zum Transportieren von Leergut in einen Sammelbehälter in perspektivischer Ansicht.
- Figur 2: Stoßabsorber mit zweiter und dritter schiefer Ebene in perspektivischer Ansicht.

### Beschreibung des Ausführungsbeispiels

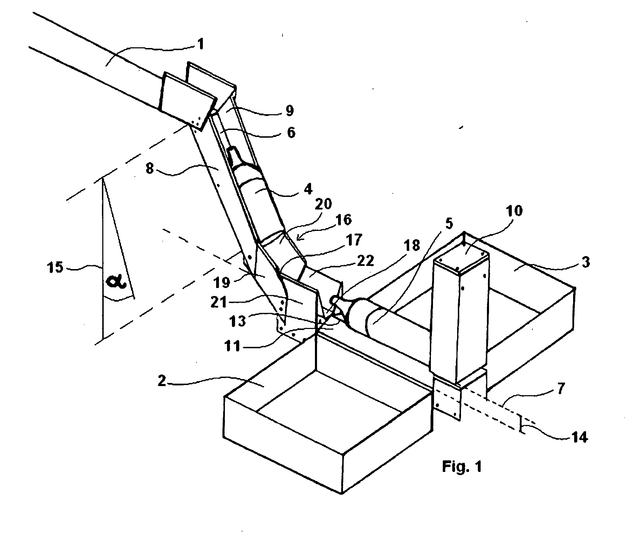

Figur 1 zeigt eine Vorrichtung zum Transportieren von Leergut von einem erhöhten Niveau 1 in zwei Sammelbehälter 2 und 3 auf einem niederen Niveau.

Das niedere Niveau ist dabei identisch mit dem Boden der beiden Sammelbehälter 2 und 3. Dabei befinden sich die Böden der beiden Sammelbehälter 2 und 3 auf demselben Niveau. Auf dem erhöhten Niveau 1 wird Leergut zugeführt. In der Zeichnung sind als Leergut 4 und 5 zwei Flaschen dargestellt. Vor Erreichen der in Figur 1 dargestellten Vorrichtung wird das Leergut beispielsweise durch einen Leergut-Rücknahmeautomaten entgegengenommen, und es werden die charakteristischen Merkmale des Leergutes erfasst. Dies ist in der Zeichnung nicht dargestellt. Auf dem erhöhten Niveau 1 kann sich beispielsweise ein Transportband zum Zuführen des Leergutes 4 und 5 zu der in der Zeichnung dargestellten Vorrichtung befinden. Ein derartiges Transportband ist ebenfalls in der Zeichnung nicht dargestellt.

Von dem erhöhten Niveau 1 gelangt das Leergut 4 und 5 über eine erste schiefe Ebene 6 auf ein Zwischenniveau 7. Dieses Zwischenniveau befindet sich unterhalb des erhöhten Niveaus 1 und oberhalb des Bodens der Sammelbehälter 2 und 3. Die erste schiefe Ebene 6 ist seitlich mit Seitenteilen 8 und 9 ausgestattet, mit denen sie zusammen eine Rinne für das Leergut 4 und 5 bildet. Die Breite der ersten schiefen Ebene 6 und der Abstand der beiden Seitenteile 8 und 9 ist dabei an den Durchmesser des Leergutes 4 und 5 angepasst. Die Breite der ersten schiefen Ebene 6 wird hierzu senkrecht zur Transportrichtung des Leergutes 4 und 5 gemessen, welche wiederum durch die Neigung der ersten schiefen Ebene 6 vorgegeben ist. Breite der ersten schiefen Ebene und Abstand der Seitenteile 8 und 9 sind nur geringfügig größer als der Durchmesser des Leergutes 4 und 5, so dass die Ausrichtung des Leergutes 4 und 5 auf der ersten schiefen Ebene vorgegeben ist.

Auf dem Zwischenniveau 7 ist ein Stoßabsorber 10 angeordnet. In Figur 1 befindet sich gerade das Leergut 5 an dem Stoßabsorber 10. Es trifft mit seinem Boden auf den Stoßabsorber 10 und gibt dabei seine kinetische Energie, die es durch das Gleiten auf der ersten schiefen Ebene 6 gewonnen hat, an den Stoßabsorber 10 ab. Nach der Wechselwirkung mit dem Stoßabsorber 10 hat das Leergut 5 die Geschwindigkeit v = 0 m/s. Das Leergut 5 kommt damit zum Stillstand.

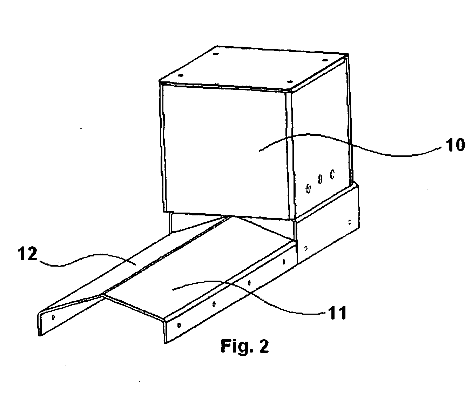

Unmittelbar vor dem Stoßabsorber 10 und unterhalb des Stoßabsorbers befinden sich die zweite und dritte schiefe Ebene 11 und 12. Die zweite schiefe Ebene 11 und die dritte schiefe Ebene 12 haben dieselbe Breite, dieselbe Länge und dieselbe Höhe und bilden entlang ihrer nach oben weisenden Seite gemeinsam einen Grad 13 aus. Dies ergibt sich aus der Darstellung gemäß Figur 2. Der Grad 13 befindet sich auf dem Zwischenniveau 7. Das durch den Stoßabsorber 10 abgebremste Leergut 5 findet auf dem Grad 13 kein stabiles Gleichgewicht und kippt entweder in Richtung der zweiten schiefen Ebene 11 oder in Richtung der dritten schiefen Ebene 12 zur Seite. Anschließend gleitet es auf der zweiten oder dritten schiefen Ebene in den zugehörigen Sammelbehälter 2 oder 3. Dabei überwindet das Leergut eine wesentlich geringere Höhe 14 als die Höhe 15 der ersten schiefen Ebene 6. Dies führt dazu, dass das Leergut 4 und 5 beim Erreichen des Sammelbehälters 2 oder 3 eine wesentlich geringere Geschwindigkeit aufweist, als beim Verlassen der ersten schiefen Ebene 6.

Um möglichst wenig Platz zu beanspruchen, verläuft die erste schiefe Ebene 6 unter einem steilen Winkel *a* gegen die Vertikale. Damit das Leergut 4 und 5 dennoch ohne auszubrechen in die waagrechte Ausrichtung auf dem Zwischenniveau 7 gelangen kann und in dieser Ausrichtung geführt und stabilisiert wird, befindet sich zwischen der ersten schiefen Ebene 6 und der zweiten schiefen Ebene 11 sowie der dritten schiefen Ebene in Übergangsbereich 16. In dem Übergangsbereich geht die Neigung der ersten schiefen Ebene 6 mit einem Zwischenschritt in eine horizontale Ausrichtung entsprechend dem Grat 13 im Zwischenniveau 7 über. Hierzu ist bei dem Ausführungsbeispiel eine vierte schiefe Ebene 17 und ein horizontal verlaufender Abschnitt 18 vorgesehen. Die vierte schiefe Ebene 17 und der horizontale Abschnitt 18 sind mit Seitenteilen 19, 20, 21 und 22 ausgestattet, welche genau wie die Seitenteile 8 und 9 das Leergut 4 und 5 führen und ein Herunterfallen des Leergutes vermeiden. Alternativ zu der vierten schiefen Ebene 17 kann zwischen der ersten schiefen Ebene 6 und dem horizontalen Abschnitt 18 auch ein gekrümmter Abschnitt vorgesehen sein, in dem die Steigung der ersten schiefen Ebene 6 kontinuierlich und stetig in eine horizontale Ausrichtung übergeht.

Figur 2 zeigt den Stoßabsorber 10 und die zweite und dritte schiefe Ebene 11 und 12 in einer perspektivischen Darstellung. Die Blickrichtung des Betrachters weicht dabei nur um einen kleinen Winkel von der Bewegungsrichtung des Leergutes ab. In dieser Darstellung ist die Ausrichtung der zweiten und dritten schiefen Ebene erkennbar.

Sämtliche Merkmale der Erfindung können sowohl einzeln als auch in beliebiger Kombination miteinander erfindungswesentlich sein.

### Bezugszeichen

- 1: erhöhtes Niveau
- 2: Sammelbehälter
- 3: Sammelbehälter
- 4: Leergut
- 5: Leergut
- 6: erste schiefe Ebene
- 7: Zwischenniveau
- 8: Seitenteil der ersten schiefen Ebene
- 9: Seitenteil der ersten schiefen Ebene
- 10: Stoßabsorber
- 11: zweite schiefe Ebene
- 12: dritte schiefe Ebene
- 13: Grat
- 14: Höhe der zweiten schiefen Ebene
- 15: Höhe der ersten schiefen Ebene
- 16: Übergangsbereich
- 17: vierte schiefe Ebene
- 18: horizontaler Abschnitt
- 19: Seitenteil
- 20: Seitenteil
- 21: Seitenteil
- 22: Seitenteil

## Patentansprüche

1. Vorrichtung zum Transportieren von Leergut in einem Leergutrücknahmeautomaten von einem erhöhten Niveau (1) in einen Sammelbehälter (2, 3) auf einem niederen Niveau,
umfassend eine erste schiefe Ebene (6), einen Stoßabsorber (10) und eine zweite schiefe Ebene (11),
wobei die erste schiefe Ebene (6) geeignet ist zum Führen des Leergutes (4, 5) in einer liegenden Ausrichtung von einem erhöhten Niveau (1) auf ein Zwischenniveau (7), dessen Niveau geringer ist als das erhöhte Niveau (1) und höher ist als das niedere Niveau, wobei
der Stoßabsorber (10) an dem Zwischenniveau (7) angeordnet ist und das Leergut (4, 5) nach dem oder bei dem Verlassen der ersten schiefen Ebene abbremst, sodass die Geschwindigkeit des Leerguts Null oder allenfalls eine wesentlich geringer Geschwindigkeit als am unteren Ende der ersten schiefen Ebene aufweist, wobei die Höhe (14) der zweiten schiefen Ebene (11) kleiner ist als die Höhe (15) der ersten schiefen Ebene (6), **dadurch gekennzeichnet, dass**
die zweite schiefe Ebene (11) so angeordnet ist, dass das Leergut direkt nach dem Abbremsen durch den Stoßabsorber auf die zweite schiefe Ebene gelangt und weiter abwärts gleitet.

2. Vorrichtung nach Anspruch 1, **dadurch gekennzeichnet, dass** sie mit einer dritten schiefen Ebene (12) ausgestattet ist, wobei die zweite (11) und die dritte schiefe Ebene (12) entlang ihrer nach oben weisenden Seite eine gemeinsame Kante oder einen gemeinsamen Grat (13) ausbilden.

3. Vorrichtung nach Anspruch 2, **dadurch gekennzeichnet, dass** die Neigung der zweiten schiefen Ebene (11) und der dritten schiefen Ebene (12) qualitativ identisch ist.

4. Vorrichtung nach einem der vorhergehenden Ansprüche, **dadurch gekennzeichnet, dass** die erste schiefe Ebene (6) an ihren Seiten Seitenteile (8, 9) aufweist, und dass die erste schiefe Ebene (6) zusammen mit den Seitenteilen (8, 9) eine Rinne bildet.

5. Vorrichtung nach Anspruch 4, **dadurch gekennzeichnet, dass** der Stoßabsorber (10) in Verlängerung der Ausrichtung der Rinne (6, 8, 9) angeordnet ist, und dass die zweite schiefe Ebene (11) zwischen der Rinne (6, 8 , 9) und dem Stoßabsorber (10) angeordnet ist.

6. Vorrichtung nach einem der vorhergehenden Ansprüche, **dadurch gekennzeichnet, dass** sie mit einem Übergangsbereich (16) zwischen der ersten schiefen Ebene (6) und dem Stoßabsorber (10) ausgestattet ist, und dass in dem Übergangsbereich (16) die Neigung gegenüber der Horizontalen kleiner ist als die Neigung der ersten schiefen Ebene (6).

7. Vorrichtung nach einem der Ansprüche 1 bis 5, **dadurch gekennzeichnet, dass** sie mit einem Übergangsbereich (16) zwischen der ersten schiefen Ebene (6) und dem Stoßabsorber (10) ausgestattet ist, dass der Übergangsbereich (16) einen gekrümmten Verlauf aufweist, dass in dem Übergangsbereich (16) an dem der ersten schiefen Ebene (6) zugewandten Ende die Steigung mit der Neigung der ersten schiefen Ebene (6) übereinstimmt, dass der Übergangsbereich (16) an dem dem Stoßabsorber (10) zugewandten Ende einen horizontalen Verlauf aufweist, und dass zwischen den beiden Enden die Steigung des Übergangsbereich (16) stetig abnimmt.

8. Vorrichtung nach einem der vorhergehenden Ansprüche, **dadurch gekennzeichnet, dass** der Stoßabsorber (10) mehrschalig kasten- oder zylinderförmig ausgeführt ist, und dass wenigstens zwei Schalen mit mindestens einem Dämpferelement aneinander gekoppelt sind.

9. Vorrichtung nach Anspruch 8, **dadurch gekennzeichnet, dass** das Dämpferelement als Federelement oder schockabsorbierendes Kunststoffelement ausgeführt ist.

## Claims

1. Device for transporting empty containers in an automated machine for collecting empty containers from an elevated level (1) into a collection container (2, 3) on a lower level,
comprising a first inclined plane (6), a shock absorber (10) and a second inclined plane (11), wherein the first inclined plane (6) is suitable for guiding the empty containers (4, 5) in a lying orientation from an elevated level (1) to an intermediate level (7), the level of which is lower than the elevated level (1) and higher than the lower level,
wherein the shock absorber (10) is located on the intermediate level (7) and decelerates the empty containers (4, 5) subsequent to or during leaving the first inclined plane, such that the velocity of the empty containers is zero or in any case is a significantly lower velocity than at the lower end of the first inclined plane,
wherein the height (14) of the second inclined plane (11) is smaller than the height (15) of the first inclined plane (6),
**characterized in that**
the second inclined plane (11) is arranged such that the empty containers, directly after deceleration by the shock absorber, reach the second inclined plane and glide further downwards.

2. Device according to Claim 1, **characterized in that** said device is equipped with a third inclined plane (12), wherein the second (11) and the third inclined planes (12) form a common edge or a common ridge (13) along their side which faces upwards.

3. Device according to Claim 2, **characterized in that** the inclinations of the second inclined plane (11) and of the third inclined plane (12) are qualitatively identical.

4. Device according to one of the preceding claims, **characterized in that** the first inclined plane (6) has lateral parts (8, 9) on its sides, and **in that** the first inclined plane (6) forms a channel together with the lateral parts (8, 9).

5. Device according to Claim 4, **characterized in that** the shock absorber (10) is arranged in an extension of the orientation of the channel (6, 8, 9), and **in that** the second inclined plane (11) is arranged between the channel (6, 8, 9) and the shock absorber (10).

6. Device according to one of the preceding claims, **characterized in that** said device is equipped with a transition region (16) between the first inclined plane (6) and the shock absorber (10), and **in that** in the transition region (16) the inclination in relation to the horizontal is smaller than the inclination of the first inclined plane (6).

7. Device according to one of Claims 1 to 5, **characterized in that** said device is equipped with a transition region (16) between the first inclined plane (6) and the shock absorber (10), **in that** the transition region (16) has a curved profile, **in that** in the transition region (16) the gradient conforms, at the end which faces the first inclined plane (6), to the inclination of the first inclined plane (6), **in that** the transition region (16) has a horizontal profile at the end which faces the shock absorber (10), and **in that** the gradient of the transition region (16) decreases steadily between the two ends.

8. Device according to one of the preceding claims, **characterized in that** the shock absorber (10) is configured with a number of shells so as to be in the form of a box or cylinder, and **in that** at least two shells are coupled together by way of at least one damper element.

9. Device according to Claim 8, **characterized in that** the damper element is implemented as a spring element or a shock-absorbing plastic element.

## Revendications

1. Dispositif pour le transport d'emballages vides dans un automate de reprise d'emballages vides, depuis un niveau rehaussé (1) dans un récipient de collecte (2, 3) jusqu'à un niveau inférieur, comprenant un premier plan incliné (6), un absorbeur de chocs (10) et un deuxième plan incliné (11),
le premier plan incliné (6) étant prévu pour guider les emballages vides (4, 5) dans une orientation couchée depuis un niveau rehaussé (1) jusqu'à un niveau intermédiaire (7), dont le niveau est inférieur au niveau rehaussé (1) et supérieur au niveau inférieur,
l'absorbeur de chocs (10) étant disposé au niveau intermédiaire (7) et freinant les emballages vides (4, 5), après qu'ils ont quitté, ou au moment où ils quittent, le premier plan incliné, de sorte que la vitesse des emballages vides soit nulle ou tout au plus nettement plus faible qu'à l'extrémité inférieure du premier plan incliné, la hauteur (14) du deuxième plan incliné (11) étant inférieure à la hauteur (15) du premier plan incliné (6), **caractérisé en ce que**
le deuxième plan incliné (11) est disposé de telle sorte que les emballages vides parviennent directement après le freinage par l'absorbeur de chocs sur le deuxième plan incliné et glissent davantage vers le bas.

2. Dispositif selon la revendication 1, **caractérisé en ce qu'**il est muni d'un troisième plan incliné (12), le deuxième (11) et le troisième (12) plan incliné formant le long de leur côté tourné vers le haut une arête commune ou une crête commune (13).

3. Dispositif selon la revendication 2, **caractérisé en ce que** l'inclinaison du deuxième plan incliné (11) et du troisième plan incliné (12) est identique du point de vue qualitatif.

4. Dispositif selon l'une quelconque des revendications précédentes, **caractérisé en ce que** le premier plan incliné (6) présente sur ses côtés des parties latérales (8, 9) et **en ce que** le premier plan incliné (6) forme une rigole conjointement avec les parties latérales (8, 9).

5. Dispositif selon la revendication 4, **caractérisé en ce que** l'absorbeur de chocs (10) est disposé dans le prolongement de l'orientation de la rigole (6, 8, 9), et **en ce que** le deuxième plan incliné (11) est disposé entre la rigole (6, 8, 9) et l'absorbeur de chocs (10).

6. Dispositif selon l'une quelconque des revendications précédentes, **caractérisé en ce qu'**il est muni d'une région de transition (16) entre le premier plan incliné (6) et l'absorbeur de chocs (10), et **en ce que** l'inclinaison dans la région de transition (16) par rapport à l'horizontale est inférieure à l'inclinaison du premier plan incliné (6).

7. Dispositif selon l'une quelconque des revendications 1 à 5, **caractérisé en ce qu'**il est muni d'une région de transition (16) entre le premier plan incliné (6) et l'absorbeur de chocs (10), **en ce que** la région de transition (16) présente une allure courbe, **en ce que** la pente dans la région de transition (16) à l'extrémité tournée vers le premier plan incliné (6) coïncide avec l'inclinaison du premier plan incliné (6), **en ce que** la région de transition (16) présente, au niveau de l'extrémité tournée vers l'absorbeur de chocs (10), une allure horizontale, et **en ce que** la pente de la région de transition (16) diminue de manière constante entre les deux extrémités.

8. Dispositif selon l'une quelconque des revendications précédentes, **caractérisé en ce que** l'absorbeur de chocs (10) est réalisé en forme de caisse ou de cylindre à plusieurs coques, et **en ce qu'**au moins deux coques sont accouplées l'une à l'autre avec au moins un élément d'amortissement.

9. Dispositif selon la revendication 8, **caractérisé en ce que** l'élément d'amortissement est réalisé sous forme d'élément à ressort ou d'élément en plastique absorbant les chocs.
